# EUROPEAN PATENT APPLICATION

(11) **EP 4 020 468 A1**
(43) Date of publication of application: **29.06.2022**
(21) Application number: 21216844.7
(22) Date of filing: 22.12.2021
(51) Int. Cl.: G10L 25/63, G10L 25/30, H04M 3/51

(54) **SYSTEM, METHOD AND APPARATUS FOR CONVERSATIONAL GUIDANCE**

(30) Priority: 22.12.2020 US 202063128989 P; 28.01.2021 US 202163142569 P
(71) Applicant: Cogito Corporation, Boston, MA 02110 (US)
(72) Inventor: Kane, John, Glen of the Downs, A98 V625 (IE)
(74) Representative: Cameron Intellectual Property Ltd

(57) **Abstract**

The present disclosure provides real-time, contextually appropriate behavioral guidance by utilizing machine learning models applied in real-time to call audio data. The systems and methods disclosed herein use a combination of acoustic signal processing and automatic speech recognition to convert raw call audio into features that are utilized in the machine learning models to create usable outputs to provide a user with behavioral guidance within a given context of a call or interaction with a customer in real-time.

## Description

### FIELD OF THE DISCLOSURE

The present disclosure is generally related to behavioral analysis resulting from acoustic signal processing and machine learning algorithms on audio data and speech to text data to provide real-time feedback to call agents.

### BACKGROUND

Typically, call classification systems can receive various types of communications from customers. These communications may include audio data from telephone calls, voicemails, or video conferences; text data from speech-to-text translations, emails, live chat transcripts, text messages; and other communication data. Conventional systems are known to generate waypoints that be used to analyze communication data. This is achieved by segmenting the communication data using features of the communication data, such as temporal, lexical, semantic, syntactic, prosodic, user, and/or other features of the communication data. The segments are formed into clusters according to similarity measures of the segments. The clusters can be used to train a machine learning classifier to identify some of the clusters as waypoints, which are portions of the communications of particular relevance to a user training the classifier. These conventional systems can also automatically classify new communications using the classifier and facilitate various analyses of the communications using the waypoints.

Unfortunately, these conventional systems are not able to provide feedback to a call agent in real- time. Therefore, it would be an advancement in the art to generate real-time feedback to call agents, thereby enhancing the user experience and increasing efficiency of communication.

### DESCRIPTION OF THE DRAWINGS

The accompanying drawings, which are incorporated in and constitute a part of this specification, illustrate embodiments of the present disclosure and, together with the general description given above, and the detailed description given below, serve to explain the principles of the present disclosure.
FIG. 1 shows a block diagram of structural components of one or more embodiments of the disclosure.
FIG. 2 shows an example of a setup process according to one or more embodiments of the disclosure.
FIG. 3 shows an example of a behavior model process according to one or more embodiments of the disclosure.
FIG. 4 shows an example of a context model process according to one or more embodiments of the disclosure.
FIG. 5 shows an example of a topic detection process according to one or more embodiments of the disclosure.
FIG. 6 shows an example of a call scoring process according to one or more embodiments of the disclosure.
FIG. 7 shows an example of a modeling process according to one or more embodiments of the disclosure.
FIG. 8 shows an example of a topic modeling process according to one or more embodiments of the disclosure.
FIG. 9 shows an example of a stream process according to one or more embodiments of the disclosure.
FIG. 10 shows an example of a system of hardware components according to one or more embodiments of the disclosure.

### DETAILED DESCRIPTION

Reference will now be made in detail to the various embodiments of the subject disclosure illustrated in the accompanying drawings. Wherever possible, the same or like reference numbers will be used throughout the drawings to refer to the same or like features. It should be noted that the drawings are in simplified form and are not drawn to precise scale. Certain terminology is used in the following description for convenience only and is not limiting. Directional terms such as top, bottom, left, right, above, below and diagonal, are used with respect to the accompanying drawings. The term "distal" shall mean away from the center of a body. The term "proximal" shall mean closer towards the center of a body and/or away from the "distal" end. The words "inwardly" and "outwardly" refer to directions toward and away from, respectively, the geometric center of the identified element and designated parts thereof. Such directional terms used in conjunction with the following description of the drawings should not be construed to limit the scope of the subject disclosure in any manner not explicitly set forth. Additionally, the term "a," as used in the specification, means "at least one." The terminology includes the words above specifically mentioned, derivatives thereof, and words of similar import.

"About" as used herein when referring to a measurable value such as an amount, a temporal duration, and the like, is meant to encompass variations of ±20%, ±10%, ±5%, ±1 %, or ±0.1% from the specified value, as such variations are appropriate.

"Substantially" as used herein shall mean considerable in extent, largely but not wholly that which is specified, or an appropriate variation therefrom as is acceptable within the field of art. "Exemplary" as used herein shall mean serving as an example.

Throughout this disclosure, various aspects of the subject disclosure can be presented in a range format. It should be understood that the description in range format is merely for convenience and brevity and should not be construed as an inflexible limitation on the scope of the subject disclosure. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 2.7, 3, 4, 5, 5.3, and 6. This applies regardless of the breadth of the range.

Furthermore, the described features, advantages and characteristics of the exemplary embodiments of the subject disclosure may be combined in any suitable manner in one or more embodiments. One skilled in the relevant art will recognize, in light of the description herein, that the present disclosure can be practiced without one or more of the specific features or advantages of a particular exemplary embodiment. In other instances, additional features and advantages may be recognized in certain embodiments that may not be present in all exemplary embodiments of the subject disclosure.

Exemplary embodiments will be described with reference to the accompanying drawings. Like numerals represent like elements throughout the several figures, and in which example embodiments are shown. However, embodiments of the claims may be embodied in many different forms and should not be construed as limited to the embodiments set forth herein. The examples set forth herein are non-limiting examples and are merely examples, among other possible examples.

Embodiments described herein help agents to be more aware of how they are coming across during phone calls and provide actionable feedback on modifying the agent's behavior to produce better call outcomes. The embodiments, as described herein, offer behavioral guidance to agents in specific situations by having a sophisticated awareness of context. This also enables agents to be more efficient and knowledgeable when encountering a topic that they generally have to look through knowledge sources to respond effectively. Furthermore, call center supervisors frequently do not have sufficient available time to train their agents, and the solution described herein helps provide training automatically without heavy, manual supervisor interventions. With call center agents now frequently working "from home," the present disclosure provides useful and novel coaching methods when the supervisor cannot "walk the floor" to provide guidance and coaching. The improvements, as described herein, also provide managers with an easy way of discovering what is being discussed in their organization and how customers "feel" about the particular topics. Thus, there is a need within the prior art to combine the ability to analyze audio and text analysis of an interaction between a call agent and a customer to provide more detailed, refined contextually-aware feedback. This feedback may be provided to the call agent in real-time, during a call session to improve the caller's experience during the interaction with a call center agent.

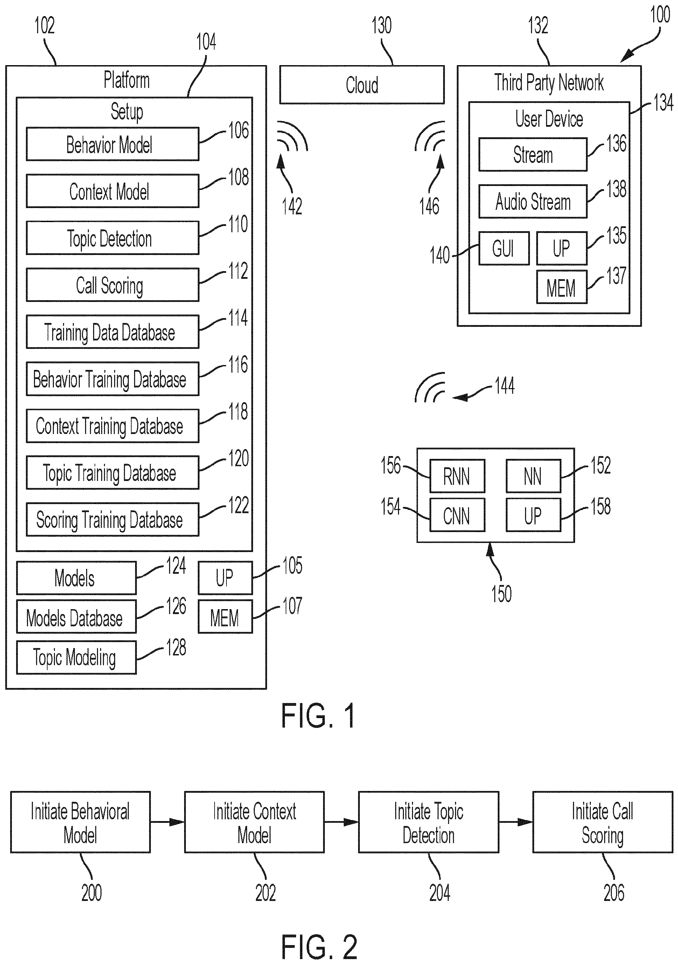

FIG. 1 shows a block diagram of structural components of one or more embodiments of the disclosure. The system 100 is used for combining words and behaviors for real-time conversational guidance.

This system 100 comprises a platform 102, a network, shown as a cloud, 130 third party network 132 and processing/storage device 150. These elements are in bi-directional communication via wired or wireless communication connections, shown as 142, 144, 146.

Platform 102 includes setup program code storage device 104, models storage device 124, models database 126 and topic modeling program storage device 128.

Setup program code storage device 104 includes behavior model program storage device 106, context model program storage device 108, topic detection program storage device 110, call scoring program storage device 112, training data database 114, behavior training database 116, context training database 118, topic training database 120 and scoring training database 122.

Platform 102 may be a network managed by a data (e.g., behavioral data (e.g., sensor, usage data, audio data, text data)) analysis service provider, a scalable cloud environment, a hosted centralized onsite server, or the like. Platform 102 may be communicatively coupled with other third-party networks or platforms to provide or perform other services on the data (e.g., audio data). The platform 102 processes (e.g., analyses) received data (e.g., audio data, sensor, and usage data) from the user device 134, *e.g.,* by executing a models program code storage device 124. The models program code storage device is any suitable storage or memory, such as an electronic storage device electronic memory suitable for storing program code.

Cloud, or Internet, or network 130 is any suitable network of computers, processing devices, output devices or that provides bi-directional communication between platform 102 and third party network 132, via bi-directional communication channels 142 and 146, respectively. These bi-directional communication channels 142, 146, as well as other communication channels may be wired or wireless communication.

Platform 102 connects and receives the real-time audio stream from the stream program storage device 136, of network 132, and initiates acoustic signal processing (ASP), as described herein, and automatic speech recognition (ASR) processes, as described herein, to extract features or inputs for machine learning models and applies the various machine learning models stored in the models database 126, which contains machine learning models that are created in the behavior model program storage device 106, context model program storage device 108, topic detection program storage device 110, and the call scoring program storage device 112, to the extracted features or inputs to create the output notifications that are sent to the stream program storage device 136 that are then displayed on one or more graphical user interfaces (GUI) shown generally as element 140 for one or more users. While one GUI 140 is shown, it is apparent to one of ordinary skill in the art that any suitable number of GUIs (140) could be used. The number of GUIs 140 is only limited by the capacity of the system 100. The user interface 140 can provide reporting interfaces to call center managers with trends over time related to call scores, topics, and behavioral guidance. This part of the user interface is further enabled with the ability to see the prevalence of certain topics in a given time interval. Thus, the disclosure enables non-verbal behavioral and emotional separation (e.g., topic X was the most prevalent topic today and most callers sounded angry when discussing this topic).

Alternatively, the platform 102 could access other machine learning protocols, or algorithms stored and processed by processing/storage device 150. Processing/storage device 150 is typically a computer, such as a server with neural network (NN) program code storage 152, convolutional neural network (CNN) program code storage 154, recurrent neural network (RNN) program code storage 156 and processor 158. The electronic storage media 152, 154 and 156 may be used to store program code for associated machine learning, or artificial intelligence data. The content of these storage media 152, 154 and 156 may be accessed and utilized by processor 158 and/or other processors disposed in cloud 130, network 132, having processor 135, and platform 102, having processor 105.

The processing/storage device 150 is in bi-directional communication with platform 102, via wired, or wireless connection 144; network 130, via wired, or wireless connection 144; and network 132 via wired, or wireless connection 144. The processing/storage device 150 has adequate storage (as shown by storage, or memories 152, 154) and processing (as shown by processor 158) capabilities to perform machine learning on data accessed from platform 102, and/or cloud 130 and/ or network 132. Processing/storage device 150 is in bi-directional communication with platform 102, cloud 130 and network 132 thereby providing and/or accessing data from those components. Setup program code storage device 104 initiates or activates the behavior model program storage device 106 and the context model program code storage device 108 and the topic detection program code storage device 110, and the call scoring program code storage device 112.

The setup program code storage device 104 creates or accesses various machine learning models. These machine learning models may be stored in processing/storage program code storage device 150 in memory devices 152, 154 and/or 156 and/or the databases 114, 116, 118, 120, 122 and 126 of platform 102.

For example, set-up processing data is typically stored in the models database 126 and used by the models program code storage device 124 using the labeled training data stored in the training data database 114, behavior training database 116, context training database 118, topic training database 120, and scoring training database 122.

The behavior model program code storage device 106, in which ASP is used to compute features used as input to machine learning models (such models may be developed offline and, once developed, can make inferences in real-time), as shown by processing/storage device 150 as well as processing and storage devices shown on platform 102.

A variety of acoustic measurements can be computed on moving windows/frames of audio data, using audio channels. Acoustic measurements include, for example, pitch, energy, voice activity detection, speaking rate, turn-taking characteristics, and time-frequency spectral coefficients (e.g., Mel-frequency Cepstral Coefficients). These acoustic measurements are used as features or inputs to the machine learning process. The labeled data from the annotation process, the data stored in the behavioral training database 116, provides targets for machine learning.

The dataset of calls containing features and targets can be split into training, validation, and test partitions. Supervised machine learning using neural networks is performed to optimize weights of a particular model architecture to map features to targets, with the minimum amount of error.

A data set (which in practice usually needs to be quite extensive) of mappings between inputs and their respective desired outputs is obtained. This data set is fed into a machine learning algorithm (e.g., a neural network, decision tree, support vector machine, etc.) which trains a model to "learn" a function that produces the mappings with a reasonably high accuracy. A variety of model architectures, including stateful, such as recurrent neural networks (RNNs), and stateless such as convolutional neural networks (CNNs), or a mix of the two, or other suitable models, may be used depending on the nature of the particular behavioral guidance being targeted.

After experimenting with a large volume of model architectures and configurations, the preferred model is selected by evaluating accuracy metrics on the validation partition. The test partition is used for reporting final results to give an impression of how likely the model is to generalize well.

Some post-processing is applied to the machine learning model outputs running in production to power the notification-based user-interface effectively. This post-processing may be performed by behavior model program code storage device 106. The machine learning model outputs is typically a probability, so this can be binarized by applying a threshold. Some additional post-processing can be applied to facilitate a certain duration of activity before the notification is triggered or to specify the minimum or maximum duration of activity of the notification.

The context model program code storage device, or context modeler, 108, which detects "call phases," such as the opening, information gathering, issue resolution, social, and closing parts of a conversation, uses lexical (word)-based features. As a result, call audio is processed using an automatic speech recognition (ASR) system, capable of both batch and real-time/streaming processing. Individual words or tokens can be converted from strings to numerical vectors using a pre-trained word-embeddings model developed internally or by using a publicly available one, such as Word2Vec or GloVE. These word embeddings constitute features or inputs to the machine learning process for modeling call phases. The labeled data from the annotation process provides the targets for machine learning. The dataset of calls containing features and targets is typically split into training, validation, and test partitions. Supervised machine learning using neural networks can be performed to optimize weights of a particular model architecture to map features to targets, with the minimum amount of error. A variety of stateful model architectures involving some recurrent neural network layers may be used.

After experimenting with a large volume of model architectures and configurations, the preferred model is selected by evaluating accuracy metrics on the validation partition. The test partition is typically used for reporting final results to give an impression of how likely the model is to generalize well.

The topic detection program code storing device 110 in which labeled call audio is processed using ASR capable of both batch and real-time/streaming processing. Individual words or tokens are converted from strings to numerical vectors using a pre-trained word-embeddings model, either developed internally or by using a publicly available one such as Word2Vec GloVE. These word embeddings are features or inputs to the machine learning process for modeling call phases. The labeled data from the annotation process provides the targets for machine learning. The labeled data from the annotation process, the data stored in the topic training database 120, provides machine learning targets.

The dataset of calls containing features and targets is typically split into training, validation, and test partitions. Supervised machine learning using neural networks is performed to optimize weights of a particular model architecture to map features to targets, with the minimum amount of error. A variety of model architectures, including stateful, such as recurrent neural networks, (RNNs), and stateless such as convolutional neural networks, (CNNs), or a combination of RNNs and CNNs, or one or more other suitable networks, may be used, singularly, or in combination, depending on the nature of the particular behavioral guidance being targeted. After experimenting with a large volume of model architectures and configurations, the preferred model is selected by evaluating accuracy metrics on the validation partition. The test partition is used for reporting final results to give an impression of how likely the model is to generalize.

The call scoring program code storage device 112, in which labeled call audio is processed using ASR capable of both batch and real-time/streaming processing. Individual words or tokens are converted from strings to numerical vectors using a suitable pre-trained word-embeddings model, such as Word2Vec GloVE. In addition to ASR processing, acoustic signal processing is also applied to the audio data. This typically involves computation of time-frequency spectral measurements (e.g., Mel-spectral coefficients or Mel-frequency cepstral coefficients). A preliminary, unsupervised machine learning process may be executed using a substantial unlabeled call center audio data volume. In some embodiments, this call center audio data may be stored in the training data database 114. The machine learning training process involves grouping acoustic spectral measurements in the time interval of individual words (as detected by the ASR) and then mapping these spectral measurements. This mapping of spectral measurements includes processing a two-dimensional representation to a one-dimensional vector representation by maximizing the orthogonality of the output vector to the word-embeddings vector described above. This output may be referred to as word-aligned, non-verbal embeddings. The word embeddings are then concatenated with the word-aligned, non-verbal embeddings to produce features, or inputs, to the machine learning process for modeling call scores. The labeled data from the annotation process provides targets for machine learning. The dataset of calls containing features and targets is split, or divided, into training, validation, and test partitions. These partitions may be any desired proportion, or ratio, of training validation to test partitions. Supervised machine learning using neural networks is performed to optimize weights of a particular model architecture to map features to targets, with minimal error. Any type, or types, of stateful model architectures involving some recurrent neural network layers may be used.

After assessing a large volume of model architectures and configurations, the preferred model is selected by evaluating accuracy metrics on the validation partition. The test partition is used for reporting final results to provide an impression of how likely the model is to generalize. This can be accomplished by call scoring program code, which is suitably stored in call scoring program code storage device 112.

The training data database 114, which contains raw training call audio data that is collected from users of the platform, is stored to be used in the annotation process described in the behavior training database 116, context training database 118, topic training database 120, and the scoring training database 122 and the in-process described in the behavior model program code storage device 106, context model program code storage device 108, topic detection program code storage device 110, and the call scoring program code storage device 112.

The call audio data may be collected from the stream program code storage device 136, which may be located on the network 132, and stored in the training data database 114 to be used in the machine learning processes, which may be executed on platform 102 and/or processor/storage 150, and data transmitted via bi-directional communication channel 148, which may be wired, or wireless, to create, or generate the models stored in the models database 126.

The behavior training database 116 contains labeled training data accessed and used by the behavior model program code device 106, which uses acoustic signal processing to compute features used as inputs to various machine learning models (performed by processing on platform 102 and/or processing performed on processor/storage 150), which may be performed by batch processing offline or may be performed in real-time. These computed features may be acoustic measurements, such as pitch, energy, voice activity detection, speaking rate, turn-taking characteristics, and time-frequency spectral coefficients, used as inputs during the machine learning process. The labeled training data in the behavior training database 116 provides the targets for the machine learning process. As stated above, user interface 140 can provide reporting interfaces to call center managers with trends over time related to call scores, topics, and behavioral guidance. This part of the user interface is further enabled with the ability to see the prevalence of certain topics in a given time interval. Thus, the disclosure enables non-verbal behavioral and emotional separation (e.g., topic X was the most prevalent topic today and most callers sounded angry when discussing this topic). This emotional data, including data related to a specific topic, may be gathered, and stored in the behavior training database 116.

The labeled training data contained in the behavior training database 116 may be generated or created through an annotation process. This annotation process example of generating labeled training data is merely one technique that may be used. Other suitable techniques could also be used. Specifically, the annotation process is a process in which human annotators listen to various call audio data and classify intervals of the call audio data to be guidable intervals or not. This annotation process includes defining what behavioral guidance is to be provided to a call agent, such as a reminder for agents if they are slow to respond to a customer request. Candidate behavioral intervals (CBIs) are defined for the human annotators, such as intervals greater than two seconds in duration in which there is no audible speaking by either party on the call. Human annotators may use these definitions to listen to the call audio data and label the data based, at least in part, on whether one or more of these parameters are met.

There may be several iterations of refining the definitions to ensure that inter-rater reliability is sufficiently high. A large volume of authentic call data, such as the call audio data stored in the training data database 114, is labeled for CBIs by human annotators. The annotation process identifies the guidable behavioral intervals (GBIs), which are a subset of the CBIs classified as intervals being guidable or not. The GBIs are defined for the human annotators, and there may be several iterations of refining the definitions to ensure that inter-rater reliability is sufficiently high.

Once the definitions have a suitable inter-rater reliability, the human annotators classify the CBIs as being guidable or not. This CBI and GBI labeled training data is stored in the behavior training database 116. The behavior training database 116 may contain the audio interval or audio clip of the CBI, the acoustic measurements such as the pitch, energy, voice activity detection, speaking rate, turn-taking characteristics, time-frequency spectral coefficients, and the GBI such as whether the CBI was classified as guidable or not. In some embodiments, the behavior training database 116 may contain each call audio data with the times that a CBI occurs and whether it is guidable or not. The behavior training database 116 may be structured in some other manner, based on the desired relationship between one or more of call data and/or the inter-rater reliability, and/or classification. The context training database 118 contains labeled training data that may be used by the context model program code storage device 108, which processes the call audio data using, for example, an automatic speech recognition (ASR) system and may also use lexical-based features, which are inputs to various machine learning models, which may be performed by batch processing offline or may be performed in real-time.

The labeled training data contained in the context training database 118 provides targets for the machine learning process. The labeled training data in the context training database 118 may be created through an annotation process. Human annotators listen to various call audio data and classify phases of the call audio data. This annotation process begins with defining call phases, such as opening a call, information gathering, issue resolution, social, or closing. Human annotators use these phases when listening to the call audio data and label the data when these definitions, or parameters, are met. There may be several iterations of refining the definitions, or parameters, to ensure that inter-rater reliability is sufficiently high. A large volume of original call data is labeled for call phases by human annotators. The call phases labeled training data is stored in the context training database 118.

The context training database 118 may contain an audio interval or an audio clip of the call topic and a call topic label such, for example, as opening a call, information gathering, issue resolution, social, or closing. The topic training database 120 contains labeled training data that is used by the topic detection program code storage device 110, which processes the call audio data using, for example automatic speech recognition (ASR) and uses lexical-based features that are inputs to various machine learning models, which may be performed by batch processing offline or may be performed in real-time. While ASR is one technique for processing the data, it will be appreciated by those of ordinary skill in the art that other suitable techniques may be used to accomplish this task.

The labeled training data contained in the topic training database 120 provides targets for the machine learning process. The labeled training data in the topic training database 120 may be generated through an annotation process. Human annotators listen to various call audio data and classify topics of the call audio data. This annotation process includes defining the topics, such as customer requesting supervisor escalation or customer likely to churn. Human annotators use these definitions, or parameters, while listening to the call audio data and label data when these definitions, or parameters, are met. There may be several iterations of refining the definitions, or parameters, to ensure that inter-rater reliability is sufficiently high.

A large volume of authentic call data may be labeled with call phases by human annotators. The call topics labeled training data is stored in the topic training database 120. The topic training database 120 may contain the audio interval or audio clip of the call topic. The call topic label such as the customer requests supervisor escalation, or customer likely to churn. The scoring training database 122 contains labeled training data that is used by the call scorer, or call scoring program code storage device, 112, which processes the call audio data using an automatic speech recognition system and may also uses lexical-based features that are inputs to various machine learning models, which may be performed by batch processing offline or may be performed in real-time.

The labeled training data contained in the score training database 122 provides targets for the machine learning process. The labeled training data in the scoring training database 122 may be generated through an annotation process. Human annotators listen to various call audio data and provide a call score for the call audio data. This annotation process begins with defining, or establishing, a call score construct, such as a perception of customer experience or customer satisfaction. Human annotators use these definitions, or parameters, while listening to call audio data and label the data based, at least in part, on these definitions, or parameters. There may be multiple iterations of refining the definitions to ensure that inter-rater reliability is sufficiently high. A volume of authentic call data is labeled for call phases by human annotators. The call score labeled training data is stored in a suitable memory storage, such as the scoring training database 122. The scoring training database 122 may contain the audio interval or audio clip of the call score and the call score label such as a perception of customer experience or customer satisfaction, or other parameters.

The modeler, or models program code storage device, 124 is configured to receive a real-time audio stream from the streamer, or stream program code storage device, 136 and initiates the ASP and ASR processes to extract features or inputs for the machine learning models and apply one or more machine learning models stored in the models database 126, which contains one or more machine learning models, which are generated in one or more, or any combination of the behavior modeler, or behavior model program code storage device, 106, context modeler, or context model program code storage device 108, topic detector, or topic detection program code storage device 110, and the call scorer, or call scoring program code storage device 112, to the extracted features or inputs to create the output notifications that are sent to the streamer, or stream program code storage device 136 that are then displayed on the graphical user interface (GUI) 140 for one or more users.

The models database 126 contains one or more machine learning models resulting in the processes described in the behavior modeler, or behavior model program code storage device 106,context modeler, or context model program code storage device 108, topic detector, or topic detection program code storage device 110, and the call scorer, or call scoring program code storage device 112, which may incorporate the real-time audio stream from the user device 134, in which the machine learning models are continuously being refined and stored in the models database 126.

The machine learning models stored in the models database 126 are used in the process described in the modeler, or models program storage device 124, in which the real-time audio stream from the user device 134 is provided, or applied, to the various machine learning models stored in this database to provide real-time conversation guidance to a user at user device 134. The machine learning processing may also be performed at processor/storage 150, which has adequate storage and processing capabilities to perform the desired machine learning. Processor 158, NN 152, CNN 154 and RNN 156 may be utilized to perform this machine learning task.

The topic modeler, or topic modeling program code storage device 128 may be initiated when a predetermined time is reached, or has elapsed, for example, at the end of the month, quarter, or year, or other time interval. The topic modeler 128 determines a time interval in which to collect data, such as from the previous month, week, etc. In some embodiments, a user of the platform 102 may determine the time interval. Call audio data is extracted from the determined time interval. For example, the call audio data from the previous month. In some embodiments, the historical call audio data may be collected from the streamer 136 and stored in a historical database), which may be a portion of memory 107 or any suitable memory, or electronic storage medium, located on the platform 102, or remote from platform 102.

Automatic speech recognition is performed on the call audio data from the determined time interval. For example, call audio data may be processed using an automatic speech recognition (ASR) system, capable of both batch and real-time/streaming processing. Individual words or tokens may be converted from strings to numerical vectors using a pre-trained word-embeddings model, which may be customized or may be a publicly available model, such as Word2Vec GloVE. These word embeddings are features or inputs to the machine learning process for modeling call topics.

The ASR data is inputted into a suitable topic model algorithm. For example, the text associated with each call is treated as a "document." This dataset of documents is used as input to a topic modeling algorithm, for example, based on Latent Dirichlet Allocation (LDA).

Latent Dirichlet Allocation may be a generative statistical model that allows sets of observations to be explained by unobserved groups that explain why some parts of the data are similar. For example, observations may be words collected into documents. In that case, LDA posits that each document is a mixture of a small number of topics and that each word's presence is attributable to one of the document's topics. Human annotators can review the outputted topics by the topic model algorithm. The human annotators are provided a set of calls, which may be a representative subset, typically smaller than the topic cluster, from the particular detected topic cluster of calls. The human operators identify a definition, parameter, or characteristic, which is common to these examples from that cluster. A new time interval is then selected, for example, the call audio data from the previous day.

In some embodiments, a user of the platform 102 may determine the time interval. Then the topic modeler, or topic modeling program code storage device 128 extracts call audio data from the determined time interval. For example, the call audio data from the previous day. In some embodiments, the historical call audio data may be collected from the streamer, 136 and stored in a historical database, such as memory 107, or any suitable electronic storage, or memory location, on the platform 102 or remote from platform 102.

Automatic speech recognition is performed on the call audio data from the determined time interval. For example, all call audio is processed using an automatic speech recognition (ASR) system, capable of both batch and real-time/streaming processing. Individual words or tokens are converted from strings to numerical vectors using a pre-trained word-embeddings model, which may either be custom-developed or by using a publicly available model such as Word2Vec GloVE. These word embeddings are the features or inputs to the machine learning process for modeling call topics. The pre-trained LDA topic model is applied to the ASR data. For example, the text associated with each call is treated as a "document," This dataset of documents is used as input to a topic modeling algorithm, for example, based on Latent Dirichlet Allocation (LDA). Latent Dirichlet Allocation may be a generative statistical model that allows sets of observations to be explained by unobserved groups that explain why some parts of the data are similar.

For example, suppose observations are words collected into documents. In that case, it posits that each document is a mixture of a small number of topics and that each word's presence is attributable to one of the document's topics. Using the definitions from the human annotators allows topic modeler 128 to utilize an algorithm to provide topic labels to each call.

Internet, Cloud or communication network 130 may be a wired and a wireless network. The network 130, if wireless, may be implemented using communication techniques such as Visible Light Communication (VLC), Worldwide Interoperability for Microwave Access (WiMAX), Long Term Evolution (LTE), Wireless Local Area Network (WLAN), Infrared (IR) communication, Public Switched Telephone Network (PSTN), Radio waves, and other communication techniques as known in the art.

The communication network 130 may allow ubiquitous access to shared pools of configurable system resources and higher-level services that can be rapidly provisioned with minimal management effort, often over the Internet, and rely on sharing resources to achieve coherence economies of scale, like a public utility.

Third-party clouds, or other networks, 132 enable organizations to focus on their core businesses instead of expending resources on computer infrastructure and maintenance. Network 132 may include user devices 134, streamer, or stream program code storage device 136, audio streamer, or audio stream program code storage device 138 and graphical user interface (GUI) 140. As shown in FIG. 1, the network 132 is one example of various clients or users that may have a subscription, or otherwise have access to the services offered by platform 102.

While one network 132 is shown, it is apparent to those of skill in the art that other networks (not shown) can also have access to platform 102. These other networks (not shown) can access platform 102 via Internet 130.

Network 132 may be a second network that is provided with access to platform 102 via cloud or Internet 130. The network 132 may be optional since user devices 134 may communicate with platform 102 via cloud or Internet 130.

Indeed, network 132 may have a plurality of users and may be located on any suitable network, platform, or a scalable cloud environment. User devices 134 include any suitable number of user devices. While only one user device 134 is shown, it is an embodiment that any suitable number of user devices 134 may be used. The number of user devices 134 is only limited by the cloud, or Internet 130 capacity and/or the network 132 capacity.

User devices 134, may be any suitable processing device with adequate memory and processing functionality to perform the storage and processing of data provided by platform 102 via network 130 and/or network 132. The user devices 134 may include laptops, smartphones, tablets, computers, smart speakers, or other processing device. User device 134, which may be a client device and part of the network 132, contains a streamer 136, an audio streamer 138, and any suitable number of GUIs 140.

Streamer 136, which connects to modeler 124, sends the audio stream of the call audio to the platform 102 and is continuously polling for feedback from the platform 102 that was displayed on the GUI 140.

Audio streamer 138 delivers real-time audio through a network connection, for example, a real-time audio stream of call audio between a call agent, who has access to the platform's services, and a client customer. The GUI 140 may accept inputs from users or provide outputs to the users or perform both the actions.

In one case, a user can interact with the interface(s) 140 using one or more user-interactive objects and devices. The user-interactive objects and devices may comprise user input buttons, switches, knobs, levers, keys, trackballs, touchpads, cameras, microphones, motion sensors, heat sensors, inertial sensors, touch sensors, or a combination of the above. Further, the interface(s) 140 may either be implemented as a Command Line Interface (CLI), a Graphical User Interface (GUI), a voice interface, or a web-based user-interface.

FIG. 2 shows functioning of the setup program code storage device (shown as element104 in FIG. 1). Setup program code storage device initiates the behavioral modeler 200 (behavior modeler is shown as element 106 in FIG. 1). The behavior modeler utilizes acoustic signal processing (ASP) to compute features used as input to machine learning models (this is done in batch mode during offline algorithm development and may complete in real-time).

A variety of acoustic measurements are computed on moving windows/frames of the audio, using both audio channels. Acoustic measurements include pitch, energy, voice activity detection, speaking rate, turn-taking characteristics, and time-frequency spectral coefficients (e.g., Mel-frequency Cepstral Coefficients). These acoustic measurements are the features or inputs to the machine learning process. The labeled data from the annotation process, the data stored in the behavioral training database (shown as element 116 in FIG. 1), provides the targets for machine learning. The dataset of calls containing features and targets is split into training, validation, and test partitions. Supervised machine learning using neural networks is performed to optimize weights of a particular model architecture to map features to targets, with the minimum amount of error.

A variety of model architectures, including stateful, such as recurrent neural networks, or RNNs, and stateless such as convolutional neural networks, or CNNs, or a mix of the two are used depending on the nature of the particular behavioral guidance being targeted. After experimenting with a large volume of model architectures and configurations, the preferred model is selected by evaluating accuracy metrics on the validation partition. The test partition is used for reporting final results to give an impression of how likely the model is to generalize well. Some post-processing is applied to the machine learning model outputs running in production to power the notification-based user-interface effectively. The machine learning model outputs is typically a probability, so this needs to be binarized by applying a threshold. Some additional post-processing can be applied to require a certain duration of activity before the notification is triggered or to specify a minimum or maximum duration of the notification activity.

Setup program code storage device (shown in FIG. 1 as element104) initiates the context modeler (shown in FIG, 1 as element 108), as shown in FIG. 2 as 202.

The context modeler, in which call phase detection, such as the opening, information gathering, issue resolution, social, and closing parts of a conversation, is done using lexical (word)-based features. As a result, all call audio is processed using an automatic speech recognition (ASR) system, capable of both batch and real-time/streaming processing. Individual words or tokens are converted from strings to numerical vectors using a pre-trained word-embeddings model developed internally or by using a publicly available one, such as Word2Vec GloVE. These word embeddings are the features or inputs to the machine learning process for modeling call phases. The labeled data from the annotation process provides the targets for machine learning. The dataset of calls containing features and targets is split into training, validation, and test partitions.

Supervised machine learning using neural networks is performed to optimize weights of a particular model architecture to map features to targets, with the minimum amount of error. A variety of stateful model architectures involving some recurrent neural network layers are used. After experimenting with a large volume of model architectures and configurations, the preferred model is selected by evaluating accuracy metrics on the validation partition. The test partition is used for reporting final results to give an impression of how likely the model is to generalize well.

Setup program code storage device, as shown herein initiates the topic detector (shown in FIG. 1 as element 110) as shown in FIG. 2 at 204. The topic detector in which all labeled call audio is processed using ASR capable of both batch and real-time/streaming processing. Individual words or tokens are converted from strings to numerical vectors using a pre-trained word-embeddings model, either developed internally or by using a publicly available one such as Word2Vec GloVE. These word embeddings are features or inputs to the machine learning process for modeling call phases. The labeled data from the annotation process provides the targets for machine learning. The labeled data from the annotation process, the data stored in the topic training database (shown in FIG, 1 as element120), provides machine learning targets.

The dataset of calls containing features and targets is split into training, validation, and test partitions. Supervised machine learning using neural networks is performed to optimize weights of a particular model architecture to map features to targets, with the minimum amount of error. A variety of model architectures, including stateful, such as recurrent neural networks, or RNNs, and stateless such as convolutional neural networks, or CNNs, or a mix of the two are used depending on the nature of the particular behavioral guidance being targeted. After experimenting with a large volume of model architectures and configurations, the preferred model is selected by evaluating accuracy metrics on the validation partition. The test partition is used for reporting final results to give an impression of how likely the model is to generalize well.

Setup program code storage device, shown as element 104 in FIG. 1) initiates call scorer (shown in FIG. 1 as element 112), as shown in FIG. 2 at 206. The call scorer, in which all labeled call audio is processed using ASR capable of both batch and real-time/streaming processing. Individual words or tokens are converted from strings to numerical vectors using a pre-trained word-embeddings model, either developed internally or by using a publicly available one such as Word2Vec GloVE.

In addition to ASR processing, acoustic signal processing is also applied to the audio. It involves the computation of time-frequency spectral measurements (e.g., Mel-spectral coefficients or Mel-frequency cepstral coefficients). A preliminary, unsupervised machine learning process is carried out using a substantial unlabeled call center audio data volume. In some embodiments, this call center audio data may be stored in the training data database (FIG. 1, element 114).

The machine learning training process involves grouping acoustic spectral measurements in the time interval of individual words (as detected by the ASR) and then mapping these spectral measurements, which are two-dimensional to a one-dimensional vector representation by maximizing the orthogonality of the output vector to the word-embeddings vector described above. This output may be referred to as "word-aligned, non-verbal embeddings." The word embeddings are then concatenated with the "word-aligned, non-verbal embeddings" to produce the features or inputs to the machine learning process for modeling call scores. The labeled data from the annotation process provides the targets for machine learning. The dataset of calls containing features and targets is split into training, validation, and test partitions.

Supervised machine learning using neural networks is performed to optimize weights of a particular model architecture to map features to targets, with the minimum amount of error. A variety of stateful model architectures involving some recurrent neural network layers are used. After experimenting with a large volume of model architectures and configurations, the preferred model is selected by evaluating accuracy metrics on the validation partition. The test partition is used for reporting final results to give an impression of how likely the model is to adequately generalize well.

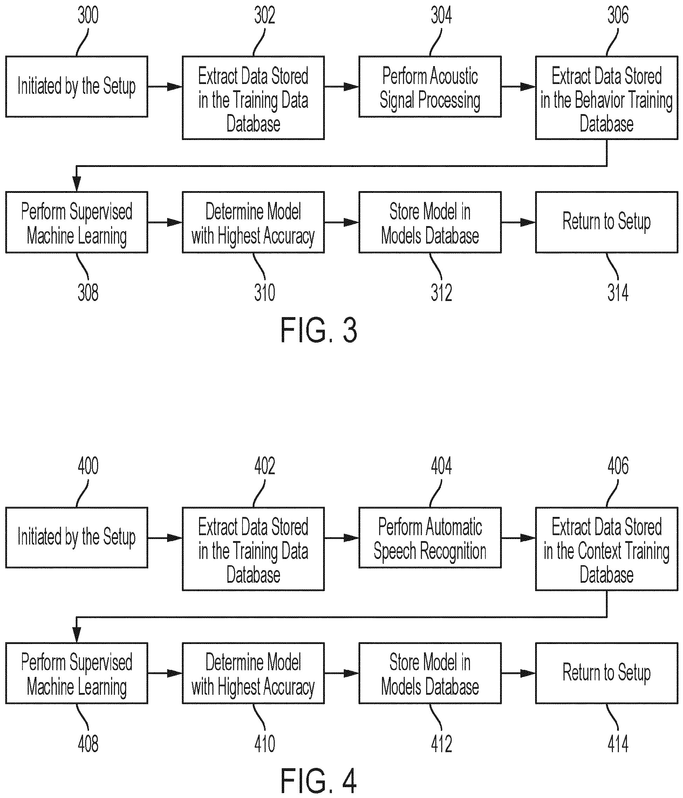

FIG. 3 describes functioning of the behavior modeler) shown in FIG. 1 as element 106). Behavioral modeler initiated, at 300.

Behavioral modeler extracts the call audio data stored in the training data database (FIG. 1, element 114), as shown in 302, which contains raw training call audio data that is collected from users of the platform which may be collected. This collection may be performed by the Streamer, shown in FIG. 1 as element 136) and stored in the training data database to be used to in the machine learning process.

Behavioral modeler performs acoustic signal processing on the extracted call audio data from the training data database, as shown at 304.

Acoustic signal processing is the electronic manipulation of acoustic signals. For example, various acoustic measurements are computed on moving windows/frames of the call audio, using both audio channels, such as the agent and the customer. Acoustic measurements include pitch, energy, voice activity detection, speaking rate, turn-taking characteristics, and time-frequency spectral coefficients (e.g., Mel-frequency Cepstral Coefficients). These acoustic measurements are used as inputs for the supervised machine learning process described in 308.

Behavioral modeler extracts the data stored in the behavior training database, shown in FIG. 1 as element 116, as shown in FIG. 3 by 306. The extracted data contains labeled training data that is used by the behavior modeler, which uses acoustic signal processing to compute features that are used as inputs to various machine learning models, which may be performed by batch processing offline or may be performed in real-time.

These computed features may be acoustic measurements, such as pitch, energy, voice activity detection, speaking rate, turn-taking characteristics, and time-frequency spectral coefficients, used as inputs during the machine learning process. The labeled training data contained in the behavior training database (FIG. 1, element 116) provides the targets for the machine learning process. The labeled training data contained in the behavior training database FIG. 1, element 116) is created through an annotation process, in which human annotators listen to various call audio data and classify intervals of the call audio data to be guidable intervals or not. This annotation process begins with defining what behavioral guidance is to be provided to a call agent, such as a reminder for agents if they are slow to respond to a customer request. Then, candidate behavioral intervals (CBIs) are defined for the human annotators, such as intervals greater than two seconds in duration where there is no audible speaking by either party on the call. Human annotators use these definitions to listen to the call audio data and label the data when these definitions are met. There may be several iterations of refining the definitions to ensure that inter-rater reliability is sufficiently high.

A large volume of authentic call data, such as the call audio data stored in the training data database 114, is labeled for CBIs by human annotators. During the annotation process the guidable behavioral intervals (GBIs) are identified, which are a subset of the CBIs classified as intervals being guidable or not. The GBIs are defined for the human annotators, and there may be several iterations of refining the definitions to ensure that inter-rater reliability is sufficiently high. Once the definitions have high inter-rater reliability, the human annotators classify all the CBIs as being guidable or not. This CBI and GBI labeled training data is stored, for example in the behavior training database (shown as element 116 herein).

The database may contain the audio interval or audio clip of the CBI, the acoustic measurements such as the pitch, energy, voice activity detection, speaking rate, turn-taking characteristics, time-frequency spectral coefficients, and the GBI such as if the CBI was classified as guidable or not. In some embodiments, the database may contain each call audio data with the times that a CBI occurs and whether it is guidable or not or structured in some other manner.

Behavioral modeler, (shown in FIG. 1 as element 106) performs a supervised machine learning process using the data extracted from the training data database (shown in FIG. 1 as element 114) as shown in FIG. 3 at 308. This supervised machine learning process of 308 may also include data from the behavior training database (shown in FIG. 1 as element116).

For example, supervised machine learning may be the machine learning task of learning a function that maps an input to an output based on example input-output pairs. It infers a function from labeled training data consisting of a set of training examples. In supervised learning, each example is a pair consisting of an input object (typically a vector) and the desired output value (also called the supervisory signal).

A supervised learning algorithm analyzes the training data and produces an inferred function, which can be used for mapping new examples. An optimal scenario will allow for the algorithm to correctly determine the class labels for unseen instances. This requires the learning algorithm to generalize from the training data to unseen situations in a "reasonable" way. For example, the dataset of calls containing features from the training data database (FIG. 1, element114), and targets, from the behavior training database (FIG. 1, element 116) is split into training, validation, and test partitions.

Supervised machine learning using suitable neural networks is performed to optimize weights of a particular model architecture to map features to targets, with the minimum amount of error. A variety of model architectures are used, including stateful, for example, recurrent neural networks, (RNNs), and stateless, for example, convolutional neural networks, (CNNs); in some embodiments, a combination of the two, or one or more other suitable networks, may be used, depending on the nature of the particular behavioral guidance being targeted.

Behavioral modeler (FIG. 1, element 106) determines the model with the highest accuracy, as shown in FIG. 3 at 310. For example, this may be accomplished using one or more classification metrics, such as standard binary classification metrics, including precision, recall, F1 score, accuracy, or any combination of classification metrics. For example, following evaluation of a large volume of model architectures and configurations, the most preferred model is selected based at least in part on accuracy metrics on the validation partition. The test partition may be used for reporting results to give an impression of how likely the model is to generalize.

As shown in FIG. 3, at 312, behavioral modeler, shown as element 106, in FIG. 1 may be used to store a model with the highest determined accuracy, or most preferred evaluation in the models database, shown as element 126 in FIG. 1.

As shown in FIG. 3, at 314, the setup program code storage device (element 104, in FIG. 1) is then accessed.

FIG. 4 shows context modeler, shown in FIG. 1 as element 108.

Context modeler (FIG. 1, element 108) initiated, as shown by 400. This initiation may be performed by the Setup program code storage device, shown in FIG. 1 as element 104.

Context modeler extracts the call audio data stored in the training data database (shown in FIG. 1 as element 114), as shown by 402. The call audio data, which contains raw training call audio data that is collected from users of the platform which may be collected from the streamer (FIG. 1, element 136) and stored in a database, such as the training data database, as described herein, is used in the machine learning process.

Context modeler (FIG. 1, element 108) performs automatic speech recognition, as shown by 404. This automatic speech recognition utilizes the extracted call audio data, for example from the training data database (FIG. 1, element 114).

For example, call audio is processed using an automatic speech recognition (ASR) system, capable of both batch and real-time/streaming processing. Individual words or tokens are converted from strings to numerical vectors using a pre-trained word-embeddings model, which may either be developed or by using a publicly available one such as Word2Vec GloVE. These word embeddings are features or inputs to the machine learning process for modeling call phases.

The context modeler (FIG. 1, element 108) extracts the data stored, for example, in the context training database (FIG. 1, element 118), as shown by 406. This data contains labeled training data that is used by the context modeler, which processes the call audio data using an automatic speech recognition system and uses lexical-based features which are the inputs to various machine learning models, which may be performed by batch processing offline or may be performed in real-time.

The labeled training data contained in the context training database (FIG. 1, element 118) provides the targets for the machine learning process. The labeled training data in the context training database (FIG. 1, element 118) is created through an annotation process. Human annotators listen to various call audio data and classify phases of the call audio data.

This annotation process begins with defining the call phases, such as opening a call, information gathering, issue resolution, social, or closing. Human annotators use these definitions to listen to the call audio data and label the data when these definitions are met. There may be several iterations of refining the definitions to ensure that inter-rater reliability is sufficiently high. Then a large volume of authentic call data is labeled for call phases by human annotators. The call phases labeled training data is stored in the context training database (FIG. 1, element 118). The database may contain the audio interval or audio clip of the call topic. The call topic label includes opening a call, information gathering, issue resolution, social, or closing.

Context modeler (FIG. 1, element 108) performs a supervised machine learning process using the data, which may be extracted from the training data database (FIG. 1, element 114) and the context training database (FIG. 1, element118), as shown at 408.

For example, supervised machine learning may be the machine learning task of learning a function that maps an input to an output based on example input-output pairs. It infers a function from labeled training data consisting of a set of training examples. In supervised learning, each example is a pair consisting of an input object (typically a vector) and the desired output value (also called the supervisory signal).

A supervised learning algorithm analyzes the training data and produces an inferred function, which can be used for mapping new examples. An optimal scenario will allow for the algorithm to correctly determine the class labels for unseen instances. This requires the learning algorithm to generalize from the training data to unseen situations in a "reasonable" way. For example, the labeled data stored, for example, in the context training database (shown in FIG.1, element118) from the annotation process provides the machine learning process targets.

The features from ASR data 704, for example from the training data database (FIG.1, element 114) are used as the inputs. The dataset of calls containing features, from ASR data 404 from the training data database (FIG. 1, element 114), and targets, from the context training database (FIG. 1, element 118), is split into training, validation, and test partitions. Supervised machine learning using neural networks is performed to optimize weights of a particular model architecture to map features to targets, with the minimum amount of error.

A variety of stateful model architectures involving some recurrent neural network layers may be used.

The context modeler (FIG. 1, element 108) determines the model with the highest accuracy, as shown at 410. For example, this may be accomplished using standard binary classification metrics, including precision, recall, F1 score, and accuracy. For example, after experimenting with a large volume of model architectures and configurations, the preferred model is selected by evaluating accuracy metrics on the validation partition. The test partition is used for reporting final results to give an impression of how likely the model is to generalize well.

Context modeler (FIG. 1, element 108) stores the model with the highest determined accuracy, as shown at 410. This model may be stored, for example, in the models database, shown in FIG, 1 as element 126).

Context modeler returns to a set-up state, as shown by 414.

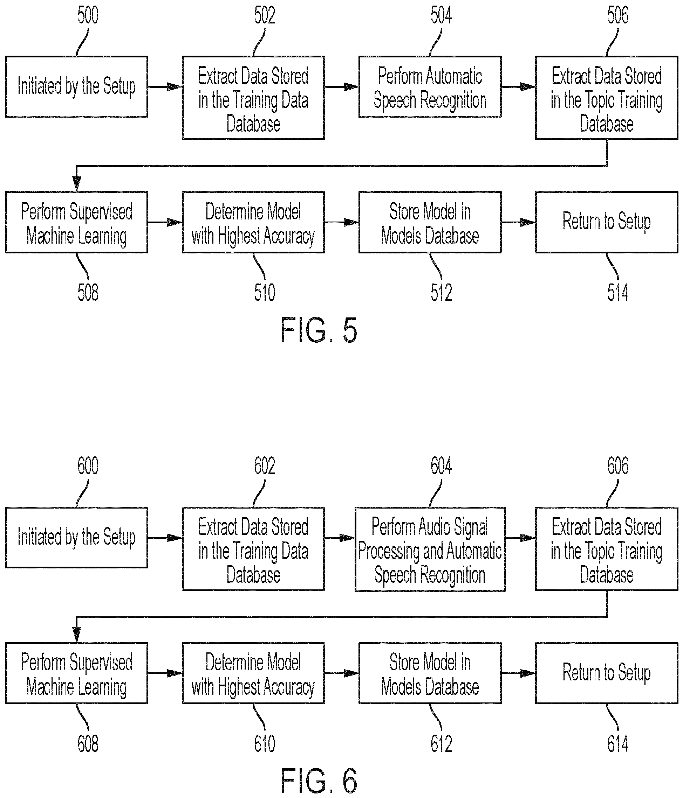

FIG. 5 describes topic detector, shown in FIG. 1 as element 110. Topic detector can be being initiated by a set-up process, which may be executed by the setup program code storage device (FIG. 1, element 104), as shown by 500.

Topic detector (FIG.1, element110) extracts the call audio data, as shown by 502. The extracted call audio data is typically stored in the training data database (FIG. 1, element 114). The call audio data contains raw training call audio data that is collected from users of the platform which may be collected from the streamer (FIG. 1, element 136) and stored in the training data database (FIG. 1, element 114) to be used in the machine learning process.

Topic Detector FIG. 1, element 110) performs automatic speech recognition on the extracted call audio data, as shown by 504. This data is typically accessed from the training data database (FIG. 1, element 114).

For example, call audio is processed using an automatic speech recognition (ASR) system, capable of both batch and real-time/streaming processing. Individual words or tokens are converted from strings to numerical vectors using a pre-trained word-embeddings model, which may either be developed or by using a publicly available one such as Word2Vec GloVE. These word embeddings are the features or inputs to the machine learning process for modeling call topics.

Topic detector (FIG. 1, element 110) extracts the data stored in the topic training database (FIG. 1, element 120), as shown at 506. This data contains labeled training data that is used by the topic detector, which processes the call audio data using an automatic speech recognition system and uses lexical-based features that are the inputs to various machine learning models, which may be performed by batch processing offline or may be performed in real-time.

The labeled training data contained in the topic training database (FIG. 1, element 120) provides the targets for the machine learning process. The labeled training data in the topic training database (FIG. 1, element 120) is created through an annotation process. Human annotators listen to various call audio data and classify topics of the call audio data. This annotation process begins with defining the topics, such as customer requesting supervisor escalation or customer likely to churn. Human annotators use these definitions to listen to the call audio data and label the data when these definitions are met.

There may be several iterations of refining the definitions to ensure that inter-rater reliability is sufficiently high. Then a large volume of authentic call data is labeled for call phases by human annotators. The call topics labeled training data is stored in a database, such as the topic training database (FIG. 1, element 120).

The database may contain the audio interval or audio clip of the call topic and the call topic label such as customer requesting supervisor escalation or customer likely to churn.

Topic detector (FIG. 1, element 110) performs a supervised machine learning process using data, as shown in 508. This data that is used includes data extracted from the training data database (FIG. 1, element 114) and the topic training database (FIG. 1, element 120). For example, supervised machine learning may be the machine learning task of learning a function that maps an input to an output based on example input-output pairs. It infers a function from labeled training data consisting of a set of training examples.

In supervised learning, each example is a pair consisting of an input object (typically a vector) and the desired output value (also called the supervisory signal). A supervised learning algorithm analyzes the training data and produces an inferred function, which can be used for mapping new examples. An optimal scenario will allow for the algorithm to correctly determine the class labels for unseen instances. The learning algorithm generalizes from the training data to unseen situations in a "reasonable" way. For example, the labeled data stored in the topic training database (FIG.1, element 120) from the annotation process provides the targets for the machine learning process, and the features from ASR data from the training data database FIG.1, element 114) are used as the inputs.

The dataset of calls containing features, from ASR data from the training data database (FIG. 1, element 114), and targets, from the topic training database (FIG. 1, element 120), is split into training, validation, and test partitions. Supervised machine learning using neural networks is performed to optimize weights of a particular model architecture to map features to targets, with the minimum amount of error. A variety of stateful model architectures involving some recurrent neural network layers may also be used.

Topic Detector (FIG.1, element 110) determines the model with the highest accuracy, as shown at 510. For example, this may be accomplished using standard binary classification metrics, including precision, recall, F1 score, and accuracy. For example, after experimenting with a large volume of model architectures and configurations, the preferred model is selected by evaluating accuracy metrics on the validation partition. The test partition is used for reporting final results to give an impression of how likely the model is to generalize well.

Topic detector (FIG. 1, element 110) stores the model with the highest accuracy in a database, for example the models database (FIG. 1, element 126), as shown by step 512.

Topic detector (FIG. 1, element 110) returns to the Setup process, as shown by 514.

FIG. 6 illustrates functionality of call scorer (FIG. 1, element 112), which includes an initiation, as shown by 600. The initiation may be achieved using setup functionality.

Call scorer (FIG. 1, element 112) extracts call audio data, as shown by 602. This call audio data may be stored in a memory, such as the training data database (FIG. 1, element 114), which contains raw training call audio data that is collected from users of the platform which may be collected from the streamer (FIG. 1, element 136) and stored in the training data database (FIG. 1, element 114) to be used to in the machine learning process.

Call scorer may perform acoustic signal processing and automatic speech recognition on the extracted call audio data from memory, such as the training data database (FIG. 1, element 114), as shown by 604.

For example, call audio data is processed using an automatic speech recognition (ASR) system, capable of both batch and real-time/streaming processing. Individual words or tokens are converted from strings to numerical vectors using a pre-trained word-embeddings model, which may either be developed or by using a publicly available one such as Word2Vec GloVE.

These word embeddings are the features or inputs to the machine learning process for modeling call scores. For example, acoustic signal processing is the electronic manipulation of acoustic signals. For example, various acoustic measurements are computed on moving windows/frames of the call audio, using both audio channels, such as the agent and the customer. Acoustic measurements include pitch, energy, voice activity detection, speaking rate, turn-taking characteristics, and time-frequency spectral coefficients (e.g., Mel-frequency Cepstral Coefficients).

Call Scorer extracts data stored in memory, as shown by 606. This memory may include the scoring training database (FIG. 1, element 122) and/or topic training database (FIG. 1, element 120). The scoring training database contains labeled training data that is used by the call scorer, which processes the call audio data using an automatic speech recognition system and uses lexical-based features that are the inputs to various machine learning models, which may be performed by batch processing offline or may be performed in real-time.

The labeled training data contained in the score training database (FIG. 1, element122) provides targets for the machine learning process. The labeled training data in the scoring training database is created, or generated, through an annotation process. Human annotators listen to various call audio data and provide a call score for the call audio data. This annotation process begins with defining the call score construct, such as the perception of customer experience or customer satisfaction, as well as other parameters. Human annotators use these definitions and parameters while listening to the call audio data and label the data when these definitions or parameters are met.

There may be several iterations of refining the definitions, and refining the parameters, to ensure that inter-rater reliability is sufficiently high. Then a large volume of authentic call data is labeled for call phases by human annotators. The call score labeled training data is stored in the scoring training database (FIG. 1, element122). The database may contain the audio interval or audio clip of the call score. The call score label includes the perception of customer experience or customer satisfaction.

Call Scorer performs a supervised machine learning process using the data extracted, as shown by 608. The extracted data may be from the training data database (FIG. 1, element 114) and the scoring training database (FIG. 1, element 122). A preliminary, unsupervised machine learning process is carried out using a substantial unlabeled call center audio data volume. In some embodiments, this unlabeled call center audio data may be audio data stored in the training data database (FIG.1, element 114). The machine learning training process involves grouping acoustic spectral measurements in the time interval of individual words, as detected by the ASR, and then mapping these spectral measurements, two-dimensional, to a one-dimensional vector representation maximizing the orthogonality of the output vector to the word-embeddings vector described above. This output may be referred to as "word-aligned, non-verbal embeddings." The word embeddings are concatenated, with "word-aligned, non-verbal embeddings" to produce features or inputs to the machine learning process for modeling call phases.

The labeled data from the annotation process provides the targets for machine learning. The dataset of calls containing features and targets is split into training, validation, and test partitions. Supervised machine learning using neural networks is performed to optimize weights of a particular model architecture to map features to targets, with the minimum amount of error. A variety of stateful model architectures involving some recurrent neural network layers may be used.

Call scorer (FIG.1, element 112) determines the model with the highest accuracy, as shown by 610. For example, this may be accomplished using standard binary classification metrics, including precision, recall, F1 score, and accuracy. For example, after experimenting with a large volume of model architectures and configurations, the preferred model is selected by evaluating accuracy metrics on the validation partition. The test partition is used for reporting final results to give an impression of how likely the model is to generalize well.

Call scorer (FIG.1, element 112) stores the model with the highest accuracy, as shown by 612. This model may be stored in any suitable memory, such as in the models database (FIG. 1, element 126).

Call scorer returns to initiation, as shown by 614. This initiation can be executed in setup, as described herein.

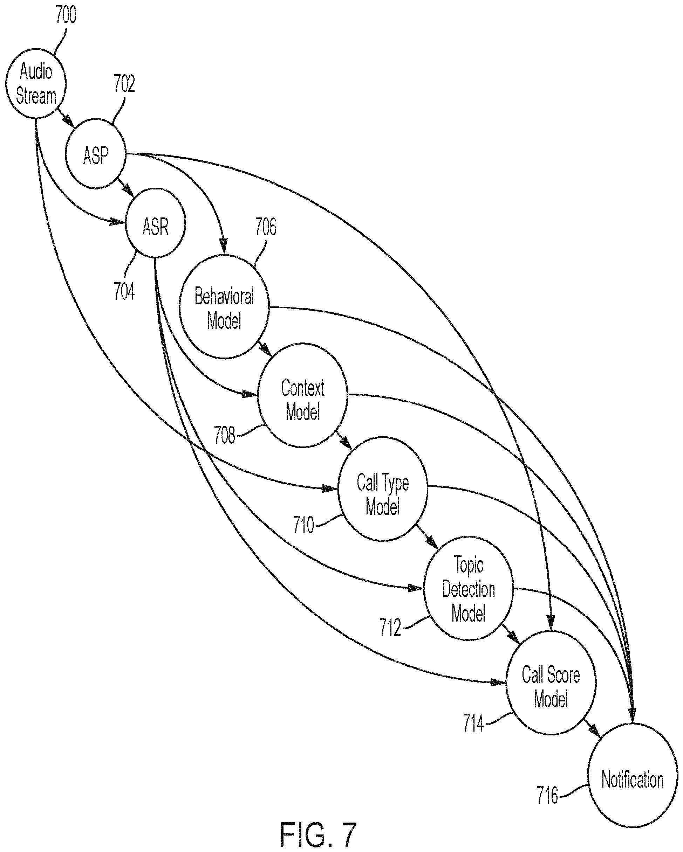

FIG. 7 shows an example of modeler functionality. The modeler is shown in FIG. 1 as element 124. The modeler receives an audio stream, as shown by 700. This is accomplished by modeler connecting to streamer (FIG.1, element 136) to receive an audio stream 700 from a user device (shown in FIG. 1 as element134). The audio stream may be a real-time audio stream of a call such as a current interaction with a user of the platform and a client such as an audio call.

The audio stream 700 may be applied to a directed acyclic graph in which is applied in real-time. A directed acyclic graph may be a directed graph with no directed cycles. It consists of vertices and edges (also called arcs), with each edge directed from one vertex to another, such that there is no way to start at any vertex v and follow a consistently-directed sequence of edges that eventually loops back to v again.

Equivalently, a DAG is a directed graph with a topological ordering, a sequence of the vertices such that every edge is directed from earlier to later in the sequence. A directed acyclic graph may represent a network of processing elements in which data enters a processing element through its incoming edges and leaves the element through its outgoing edges. For example, the connections between the elements may be that some operations' output is the inputs of other operations. These operations can be executed as a parallel algorithm in which each operation is performed by a parallel process as soon as another set of inputs becomes available to it.

The audio stream 700 may be the inputs for other components, such as the ASP, as shown by 702, ASR, as shown by 704, and the call type modeler, shown by 710. The audio stream 700 includes ASP 702 and ASR 704. The ASP 702 includes non-verbal data and ASR 704 includes verbal data. Thus, as described herein, verbal data 704 and non-verbal data 702 are used to generate feedback data, also referred to as notification data 716.

Modeler (FIG.1, element 124) initiates acoustic signal processing (ASP), as shown by 702. The input for the ASP operation is the audio stream, which is typically received from a user device, such as shown in FIG. 1, element 134.

ASP 702 may be initiated as soon as the audio stream is received as the input. Acoustic signal processing is used to compute features that are used as input to machine learning models. A variety of acoustic measurements are computed on moving windows/frames of the audio, using both audio channels. Acoustic measurements include pitch, energy, voice activity detection, speaking rate, turn-taking characteristics, and time-frequency spectral coefficients (e.g., Mel-frequency Cepstral Coefficients).

These acoustic measurements are features or inputs to the machine learning process. In some embodiments, this may be done through accomplished in real-time or through batch processing offline. The features' output is then transmitted to a behavioral model, as shown by 706 and may also be transmitted to call score model, as shown by 714.

Modelers (FIG. 1, element 124) initiates the ASR 704 or automatic speech recognition. The audio stream is used as the input, and the ASR 704 may be initiated as soon as the audio stream is received as the input.

The received audio stream data, or call audio, is processed using an automatic speech recognition (ASR) system, capable of both batch and real-time/streaming processing. Individual words or tokens are converted from strings to numerical vectors using a pre-trained word-embeddings model that may either be developed or be publicly available, such as Word2Vec or GloVE. These word embeddings are features or inputs to the machine learning process for modeling call phases, such as the context model, as shown by 708.

These outputted features may be then transmitted to the context model, as shown by 708, and/or topic detection model, as shown by 712, and/or the call score model, as shown by 714 as inputs to those operations.

Modeler (FIG. 1, element 124) initiates the behavioral model, as shown by 706, or the behavioral model is initiated as soon as the data is received from the ASP operation, shown by 702.

Behavioral modeler (FIG. 1, element 106) may apply a machine-learning algorithm to the received features from the ASP, such as the machine learning model created and stored in the process described in the behavioral modeler in relation to FIG. 1, herein. ASP 702 includes non-verbal data from audio stream 700. The features from the ASP, such as the acoustic measurements, for example, the pitch, energy, voice activity detection, speaking rate, turn-taking characteristics, and time-frequency spectral coefficients (e.g., Mel-frequency Cepstral Coefficients). The applied machine learning model outputs a probability of a GBI, or guidable behavioral intervals such as an agent is slow to respond to a customer request, which is binarized by applying a threshold to the outputted probability.

In some embodiments, additional post-processing can be applied to require a certain duration of activity before a notification is triggered, or to specify a minimum or maximum duration of activity of the notification. The notification output of the behavioral model is transmitted to be inputted to generate a notification, as shown by 716. The notification generated, as shown by 716, may also be used as feedback, or used to generate feedback.

In some embodiments, the modeler (FIG. 1, element 124) may extract the behavioral model, as described at 706, machine learning model that is stored in the models database (FIG. 1, element 126) and apply the extracted machine learning model to the received features from the ASP , shown by 702, which outputs a probability of a GBI, or guidable behavioral intervals such as an agent are slow to respond to a customer request, so this binarized by applying a threshold to the outputted probability.

In some embodiments, additional post-processing can be applied to require a certain duration of activity before notification, or feedback is triggered, or to specify a minimum or maximum duration of activity of the notification, or feedback.

This outputted notification, or feedback may be used as input for additional notifications or feedback.

Modeler (FIG. 1, element 124) can initiate the context model, as shown by 708, or the context model, as shown by 708, is initiated as soon as the data is received from the ASR operation, as shown by 704. The context model may apply a machine-learning algorithm to the received features from the ASR 704, such as the machine learning model created and stored in the process described in the context Modeler (FIG. 1, element 108).

The ASR 704, such as the individual words or tokens converted from strings to numerical vectors using a pre-trained word-embeddings model. The model's output is the call phase of the audio stream 700, such as the opening, information gathering, issue resolution, social, or closing. It is sent as input to notification, or feedback, as shown by 716.

In some embodiments, the modeler (FIG. 1, element 124) may extract the context model, shown by 708, machine learning model that may be stored in the models database (FIG. 1, element 126) and apply the extracted machine learning model to the received features from the ASR 704, which outputs the call phase such as the opening, information gathering, issue resolution, social, or closing.

In some embodiments, the model may output a probability of the call phase, which may be binarized by applying a threshold to the outputted probability. In some embodiments, additional post-processing can be applied to require a certain duration of activity before the notification is triggered, or feedback generated, or to specify a minimum or maximum duration of activity of the notification or other portion of the feedback. This outputted notification, or feedback, may be used as the input for further notification, or feedback, as shown by 716.

Modeler (FIG. 1, element 124) initiates the call type model, as shown by 710, or the call type model is initiated as soon as the data is received from the audio stream 700. The call type model 710 determines the detection of call or conversation type such as a sales call, member services, IT support, etc. This may be completed using metadata in the platform and subsequent application of a manually configurable decision tree. For example, the audio data available from the audio stream may be a member of the platform or call the agent on a certain team, such as sales, IT support, etc., and the call is either outbound or inbound.

Rules may be applied to this type of metadata to determine call type. The call type output is then sent to notification, or feedback, as shown by 716, which may be used as an input to generate notification, or feedback.

Modeler (FIG. 1, element 124) initiates topic detection model, as shown by 712, or the topic detection model 712 can be initiated as soon as the data is received from the ASR 704 operation.

The topic detection model may apply a machine-learning algorithm to the received features from the ASR 704, as shown by 712. A suitable machine-learning algorithm may be a machine learning model created and stored in the process described in the topic detector, such as the topic detector shown in FIG. 1, element 112.

The ASR process utilizes processing such that the individual words or tokens are converted from strings to numerical vectors using a pre-trained word-embeddings model. The output of the machine-learning model is the call topic of the audio stream 700, such as the customer requesting supervisor escalation, the customer is likely to churn, etc., and is sent as the input to generate a notification, or feedback, as shown by 716.

In some embodiments, the modeler (FIG. 1, element 124) may extract the topic detection model, as shown by 712, machine learning model that is stored in the models database (FIG.1, element 126) and apply the extracted machine learning model to the received features from the ASR 704, which outputs the call topic such as the customer requesting supervisor escalation, the customer is likely to churn, etc. to generate feedback, or notification, as shown by 714.

In some embodiments, the machine-learning model, such as the topic detection model may generate a probability of the call topic, which may be binarized by applying a threshold to the generated probability. In some embodiments, additional post-processing can be applied to the machine learning model, such as the topic detection model, a to determine a certain duration of activity before the notification, or feedback is triggered, or to specify a minimum or maximum duration of activity of the notification, or feedback, as shown by 712.

The outputted notification, or feedback may be used as the input for feedback or notification, as shown by 716.

The modelers (FIG. 1, element 124) can initiate the call score, as shown by 714, or, alternatively, the call score model, shown by 714, is initiated as soon as the data is received from the ASP 702 operation, shown by 702 and ASR 704 operation, shown by 704.

The call score model, shown at 714, may apply a machine-learning algorithm to the received features from the ASP 702 and the ASR 704, such as the machine learning model created and stored in the process described in the call scorer (FIG. 1, element 112). The features from the ASP 702, may involve the computation of time-frequency spectral measurements, i.e., Mel-spectral coefficients or Mel-frequency cepstral coefficients, and the data from the ASR 704, such as the individual words or tokens that are converted from strings to numerical vectors using a pre-trained word-embeddings model.

This process of acoustic signal processing, ASR processing, and transformation to a feature vector involving concatenation of word-embeddings and "word-aligned non-verbal embeddings" is performed incrementally, in real-time, and these measurements are used as input to one or more trained models, which produce outputs of a call score that is provided as an input to generate the notification, or feedback, as shown at 716.

In some embodiments, the modeler (FIG.1, element 124) may extract the call scoring model, as shown at 714, which is a machine learning model that is stored in the models database (FIG. 1, element 126) and apply the extracted machine learning model to the received features from the ASP 702, and the ASR 704, which outputs the call score such as the customer experience rating or customer satisfaction rating, etc.

In some embodiments, the model may output a probability of the call topic, which may be binarized by applying a threshold to the outputted probability, as shown by 714. In some embodiments, additional post-processing can be applied to require a certain duration of activity before the notification is triggered, or feedback is generated, or to specify a minimum or maximum duration of activity of the notification. This outputted notification is used as the input for notification, or feedback, as shown by 716.

Modeler (FIG. 1, element 124) initiates a notification, and/or generates feedback, as shown by 716. Notification or feedback generation may be initiated as soon as the data is received from the behavioral model, shown by 706, context model, shown by 708, call type model, shown at 710, topic detection model, shown at 712, call score model, shown at 714, or any combination of the models. Alternatively, as shown in FIG. 7, the feedback data (notification 716), may be generated independent of any model. This may be accomplished by the agent speaking with the customer making observations and bypassing the modelling features, described herein.

Utilizing detection of behavioral guidance and two dimensions of context such as call/conversation phases and types, an algorithm can be configured. Specific types of behavioral guidance may be emitted, and/or transmitted and/or displayed to a user if the phase-type pair is switched to "on."

This phase-type grid configuration can be done by hand or can be done via automated analysis given information on top and bottom performing call center agents. The acoustic signal processing and machine learning algorithms applied for behavioral guidance involve considerably less latency than the context model, as shown herein and in FIG. 7 at 708, or call phase detection, which typically depends on automatic speech recognition.

Embodiments, as described herein process configuration by operating on "partial" information regarding call phases when deciding whether to allow behavioral guidance or not for real-time processing. This enables the presentation of behavioral guidance as soon as it is detected, which is preferred for the targeted user experience. Post-call user experiences can show "complete" information based on what the analysis would have shown if latency was not a concern. For example, the speech recognizer is producing real-time word outputs, which may be used to generate feedback. The outputs typically have a delay, such as between one and five seconds after the word is spoken. These words are used as input to a call phase classifier, which has approximately the same latency. Detection of behaviors, such as slow to respond, has much less latency. When a slow response is produced and detected, the latest call scene or phase classification is checked to determine whether or not to show the slow response. This is partial information because it is unknown what the call scene or phase classifier is for the current time point.

After the call is finished, the information is available so there can be complete measurements. Still, in real-time, decisions are based on whatever call scene data is available to that point to provide low latency guidance. If it is appropriate to send notifications to the user, then notification, as shown by 716, receives the outputs of the behavioral model, as shown by 706, context model, shown by 708, call type model, shown by 710, topic detection model, as shown by 712, and the call score model, as shown by 714, as inputs.

The output notification, also referred to as feedback herein, is sent to the streamer (shown in FIG. 1, as element 136), and/or displayed on the GUI (FIG. 1, element 140). For example, the context-aware behavioral guidance and detected topics can be displayed in real-time to call center agents via a dialog mini-window displayed on a GUI, as described herein. Events are emitted from the real-time computer system to a message queue, which a front-end application is listening on.

The presence of new behavioral guidance events results in feedback, which may be updated feedback, appearing in the user interface. This feedback data is also available for use by agents and their supervisors in the user experience for post-call purposes. Both call phases and behavioral guidance are presented alongside the call illustration in the user interface, such as in a PlayCallView. The data provided in the notification and/or feedback can be an actionable "tip" or "nudge" on how the agent is to behave, or it could be a hyper-link to some internal or external knowledge source, as shown by 716.

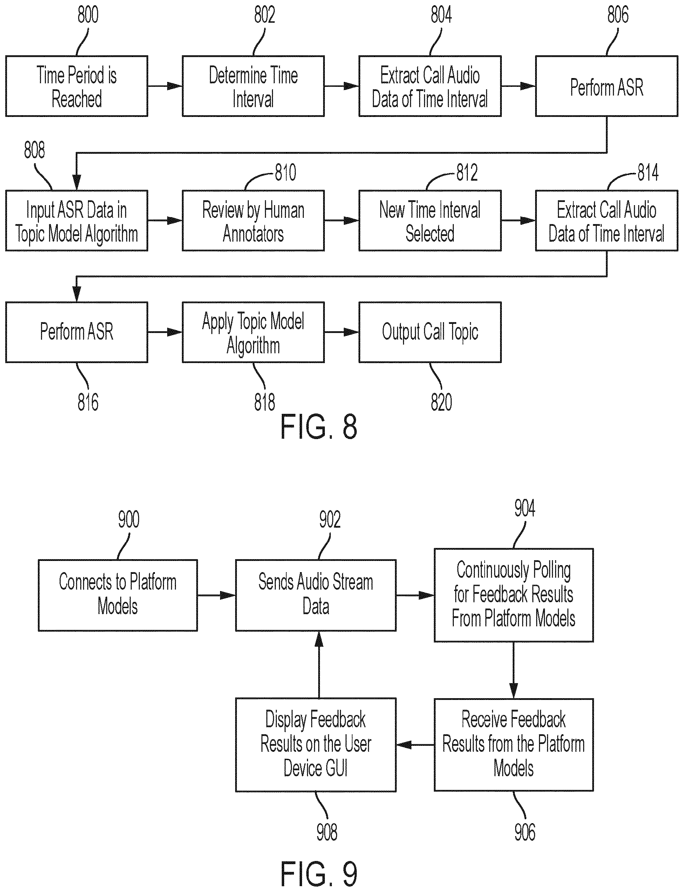

FIG. 8 shows functions of the topic modeler (FIG. 1, element 128). Topic modeler is initiated when a predetermined period is reached, as shown by 800. For example, this time period may be at the end of the month, quarter, or year.

Topic modeler determines a time interval to collect data from, such as from the previous month, week, etc. In some embodiments, a user of the platform may determine the time interval, as shown by 802.

Topic Modeler may extract the call audio data from the specified time interval, as shown by 804. For example, the call audio data may be extracted from data from the previous month. In some embodiments, the historical call audio data may be collected from the user device streamer (FIG. 1, element 136) and stored in a historical database on the platform, such as platform 102 of FIG. 1. Topic Modeler can perform automatic speech recognition on the call audio data from the determined time interval. For example, call audio is processed using an automatic speech recognition (ASR) system, capable of both batch and real-time/streaming processing, as shown by 806. Individual words or tokens are converted from strings to numerical vectors using a pre-trained word-embeddings model, which may either be developed or by using a publicly available one such as Word2Vec GloVE. These word embeddings are features or inputs to the machine learning process for modeling call topics.

Topic modeler inputs the ASR data into the topic model algorithm, as shown by 808. For example, the text associated with each call is treated as a "document". This dataset of documents may be used as input to a topic modeling algorithm, for example, based on Latent Dirichlet Allocation, or LDA. Latent Dirichlet Allocation may be a generative statistical model that allows sets of observations to be explained by unobserved groups that explain why some parts of the data are similar.

For example, when observations are words collected into documents, modelling posits that each document is a mixture of a small number of topics and that each word's presence is attributable to one of the document's topics.

Human annotators review the outputted topics by the topic model algorithm, as shown by 810. The human annotators are given a small set of calls from the particular detected topic cluster of calls and are asked to find a definition common to these examples from that cluster.

Topic modeler selects a new time interval, shown by 812. For example, the time interval may be the call audio data from the previous day. Alternatively, in some embodiments, a user of the platform may determine the time interval.

Topic Modeler extracts the call audio data (for example, the call audio data from the previous day), as shown by 814. This extraction is typically based on call audio data from the determined time interval. In some embodiments, the historical call audio data may be collected from the user device streamer (FIG. 1, element 136) and stored in a historical database on the platform.

Topic Modeler performs automatic speech recognition on the call audio data from the determined time interval, as shown by 816. For example, call audio is processed using an automatic speech recognition (ASR) system, capable of both batch and real-time/streaming processing. Individual words or tokens are converted from strings to numerical vectors using a pre-trained word-embeddings model, which may either be developed or by using a publicly available one such as Word2Vec GloVE. These word embeddings are the features or inputs to the machine learning process for modeling call topics.

Topic modeler applies the pre-trained LDA topic model, as described in steps 808 and 810, to the ASR data.

For example, the text associated with each call is treated as a "document". This dataset of documents can be used as input to a topic modeling algorithm, for example, based on Latent Dirichlet Allocation, or LDA. Latent Dirichlet Allocation may be a generative statistical model that allows sets of observations to be explained by unobserved groups that explain why some parts of the data are similar. For example, suppose observations are words collected into documents. In that case, the model posits that each document is a mixture of a small number of topics and that each word's presence is attributable to one of the document's topics. Using the human annotators' definitions, as described with respect to 810, allows the algorithm to provide topic labels to each call, as shown by 818.

Topic Modeler outputs the topic labels for each call in the new time interval, allowing a simple analysis of each call topic's prevalence, as shown at 820. In some embodiments, an investigation is provided of the processing used for behavioral guidance, including speech emotion recognition, to provide a richer, more fulsome analysis of the topic clusters, indicating what speaking behaviors or emotion categories were most common for a particular topic.

FIG. 9 shows functions of the streamer (FIG. 1, element 136). The streamer is also referred to as user device streamer herein. Streamer connects to the platform (FIG. 1, element 102) and the models (FIG. 1, elements 106, 108, 124 and 128) stored on the platform (FIG. 1, element 102) and/or connects to processing/storage device (FIG. 1, element150) and the associated storage and processors (FIG. 1, elements 152, 154, 156 and 158) that are operatively coupled to, or disposed on processing/storage device (FIG. 1, element 150), as shown by 900.

Streamer sends audio stream data to the models described above as shown by 902. These models include modeler (FIG. 1, element 124). For example, the audio stream may be a real-time audio stream of a current interaction with a user of the platform and a client, such as an audio call.

Streamer continuously polls for the feedback results, also referred to herein as feedback data, from the models, including modeler 124 of FIG. 1, as shown by 904.

Streamer receives feedback data, for example from modeler (FIG. 1, element 124), as shown by 906. For example, the feedback data received may be a reminder to the agent that they are slow to respond to a customer request. Streamer can display the feedback data to one or more user devices, such as one or more GUIs (shown in FIG. 1, as element 140).

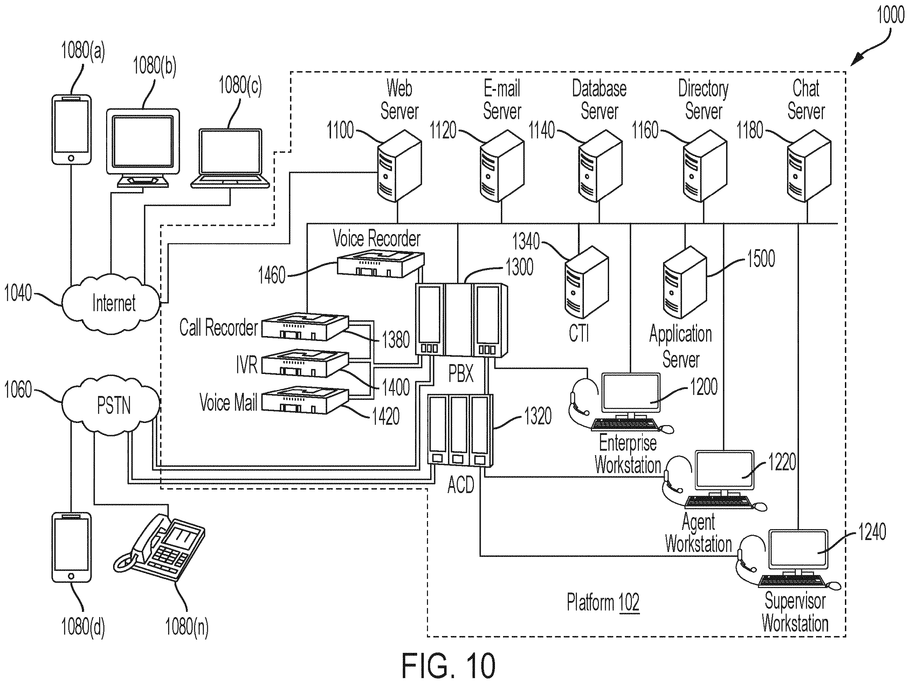

FIG. 10 shows another example of a network environment 1000 for various embodiments of the present disclosure. For any system or system element discussed in the present disclosure, there can be additional, fewer, or alternative components arranged in similar or alternative orders, or in parallel, within the scope of the various embodiments.

FIG. 10 illustrates a client-server network architecture; however, as will be apparent to those of ordinary skill in the art, alternate embodiments may utilize other network architectures, such as peer-to-peer or distributed network environments.

FIG. 10 shows network 102, which has also been described herein as a platform. The network, or platform 102 includes any suitable number, or type, of processing devices, or servers. As shown in FIG. 10, the network, or platform, 102 includes, for example, web server 1100, an e-mail server 1120, a database server 1140, a directory server 1160, and a chat server 1180. Network, or platform, 102 also includes supervisor workstation 1240, agent workstation 1220 and enterprise workstation 1200. Also disposed on network 102 are application server 1500, CTI 1340, PBX 1300, ACD 1320, voice recorder 1460, call recorder 1380, IVR 1400, voicemail 1420.

Internet 1040 and PSTN 1060 are operatively coupled to platform, or network 102. User devices, or peripheral devices 1080(a), (b), (c), (d)...(n), where "n" is any suitable number may include smartphones, laptops, desk tops, landline telephones, or other suitable device that a user, or customer, or client, may use to communicate with network, or platform 102, and ultimately with enterprise workstation 1200 and/or agent workstation 1200 and/or supervisor workstation 1240. This communication between one or more user devices 1080, generally, and platform, or network, 102 is achieved via Internet, or IP network 1040 and/or PSTN 1060.

Web server 1100 can operate as a web interface between clients, for example the end user communication devices 1080(a)... (n), enterprise workstation 1200, agent workstation 1220, supervisor workstation 1240, and the network, or platform 102 over the IP network 1040 via hypertext transfer protocol (HTTP), secure HTTP (HTTPS), and the like. The other components described in FIG. 10 are suited to communicate using an associated protocol, such as those described above.

The present disclosure provides systems and methods for real-time conversational guidance. By way of example and not limitation, a method for combining words and behaviors for real-time conversational guidance may include collecting call audio training data, annotating the call audio training data for specific definitions, converting the call audio training data using acoustic signal processing data, converting the call audio training data using automatic speech recognition data, inputting the annotated call audio training data and acoustic signal processing data into a machine learning process to create a behavior model, inputting the annotated call audio training data and automatic speech recognition data into a machine learning process to create a context model, topic detection model, inputting the annotated call audio training data, acoustic signal processing data, and automatic speech recognition data into a machine learning process to create a call score model, storing the behavior model, context model, topic detection model, and call score model, receiving a real-time audio stream of a call, converting the real-time audio stream data to acoustic signal processing data and automatic speech recognition data, and applying the behavior model, context model, topic detection model, and call score model to the acoustic signal processing data and automatic speech recognition data to provide notifications of behavioral guidance to a user within a specific context.

The functions performed in the processes and methods described above may be implemented in differing order. Furthermore, the outlined steps and operations are only provided as examples. Some of the steps and operations may be optional, combined into fewer steps and operations, or expanded into additional steps and operations without detracting from the disclosed embodiments' essence.

Therefore, some specific embodiments are described herein with reference to one or more figures.

One embodiment is directed to an apparatus ("the Apparatus") for outputting feedback to a user, the improvement characterized by: a first device (1080) for acquiring verbal data (704) and non-verbal data (702) from a first party during a communication session, the acquired verbal data (704) based, at least in part, on content of the communication session and the acquired non-verbal data (702) based, at least in part, on one or more behaviors exhibited by the first party during the communication session; the first device (1080) providing the acquired verbal data (704) and the acquired non-verbal data (702) to a second device (102, 150); one or more models (106, 108, 124, 126, 128) stored in an electronic memory (102, 104, 107); the second device (102) generating feedback data based, at least in part, on the one or more accessed models (106, 108, 124, 126, 128), the acquired verbal data (704) and the acquired non-verbal data (702); and one or more user devices (134, 1220) for outputting the feedback data to a user, the feedback data (716) utilized by one or more users to affect the communication session during the communication session.

Another embodiment is directed to the Apparatus where the acquired non-verbal data (702) includes behavioral data, based, at least in part, on acoustic signal processing (304) and a behavioral model (106, 706).

Another embodiment is directed to the Apparatus where the feedback data (716) is based, at least in part, on a context model (108, 708).

Another embodiment is directed to the Apparatus, where the feedback data (716) is based, at least in part, on a call type model (710).

Another embodiment is directed to the Apparatus, where the feedback data (710) is based, at least in part, on a topic detection model (110, 712).

Another embodiment is directed to the Apparatus, where the feedback data (716) is based, at least in part, on a call score model (114, 714).

Another embodiment is directed to the Apparatus, where the feedback data (716) is output to the user device (134, 1220) at a remote location.

Another embodiment is directed to the Apparatus, where the feedback data (716) is utilized by one or more users to affect subsequent communication sessions.

Another embodiment is directed to the Apparatus, where the feedback data (716) is based, at least in part, on segmentation.

Another embodiment is directed to the Apparatus, where the acquired non-verbal data (702) is acquired independent of a model.

Another embodiment is directed to the Apparatus, where the feedback data (716) is based, at least in part, on one or more determined time intervals associated with the acquired verbal data (704).

Another embodiment is directed to the Apparatus, where the feedback data (716) is based, at least in part, on a first time interval associated with the acquired verbal data (704) and a second time interval associated with the acquired verbal data (704), the second time interval being after the first time interval.

Another embodiment is directed to a system for outputting feedback (716) to a user, characterized in: one or more memories (104, 1500) configured to store representations of data (700) in an electronic form; and one or more processors (105, 158), operatively coupled to one or more of the memories (104, 1500), the processors (105, 158) configured to access the data (700, 702, 704) and process the data (700) to: acquire verbal data (704) from a first party during a communication session, the acquired verbal data (704) based, at least in part, on content of the communication session; acquire non-verbal data (702) from the first party during the communication session, the acquired non-verbal data (702) based, at least in part, on one or more behaviors exhibited by the first party during the communication session; access one or more models (106, 108, 124, 126, 128) from an electronic memory device (104, 105); generate feedback data (716) based, at least in part, on the one or more accessed models (106, 108, 124, 126, 128), the acquired verbal data (704) and the acquired non-verbal data (702); and output the feedback data (716) to a user device (134), the feedback data (716) utilized by one or more users to affect the communication session during the communication session.

Another embodiment is directed to a method, "the Method" for outputting feedback (716) to a user, the improvement characterized by: acquiring verbal data (704) from a first party during a communication session, the acquired verbal data (704) based, at least in part, on content of the communication session; acquiring non-verbal data (702) from the first party during the communication session, the acquired non-verbal data (702) based, at least in part, on one or more behaviors exhibited by the first party during the communication session; accessing one or more models (106, 108, 124, 126, 128) from an electronic memory device (104, 105); generating feedback data (716) based, at least in part, on the one or more accessed models (106, 108, 124, 126, 128), the acquired verbal data (704) and the acquired non-verbal data (702); and outputting the feedback data (716) to a user device (134), the feedback data (716) utilized by one or more users to affect the communication session during the communication session.

Another embodiment is directed to the Method, wherein acquiring non-verbal data (702) includes acquiring behavioral data, based, at least in part, on acoustic signal processing and a behavioral model (106, 706).

Another embodiment is directed to the Method, wherein generating feedback data (716) is based, at least in part, on a context model (108, 708).

Another embodiment is directed to the Method, wherein generating feedback data (716) is based, at least in part, on a call type model (710).

Another embodiment is directed to the Method, wherein generating feedback data (716) is based, at least in part, on a topic detection model (110, 712).

Another embodiment is directed to the Method, wherein generating feedback data (716) is based, at least in part, on a call score model (714).

Another embodiment is directed to the Method, wherein outputting the feedback data (716) to the user device (134) is at a remote location.

Another embodiment is directed to the Method, where the feedback data (716) is utilized by one or more users to affect subsequent communication sessions.

Another embodiment is directed to the Method, wherein generating the feedback data (716) is based, at least in part, on segmentation.

Another embodiment is directed to the Method, wherein acquiring non-verbal data (702) is acquired independent of a model.

Another embodiment is directed to the Method, wherein generating feedback data (716) is based, at least in part, on one or more determined time intervals associated with acquiring verbal data (704).

Another embodiment is directed to the Method, wherein generating feedback data (716) is based, at least in part, on a first time interval associated with acquiring verbal data (704) and a second time interval associated with acquiring verbal data (704), the second time interval being after the first time interval.

Another embodiment is directed to the apparatus substantially as described and shown herein.

Another embodiment is directed to the method substantially as described and shown herein.

Some exemplary embodiments of the present disclosure may be described as a system, method, or computer program product. Accordingly, embodiments of the present disclosure may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present disclosure may take the form of a computer program product embodied in one or more computer readable storage media, such as a non-transitory computer readable storage medium, having computer readable program code embodied thereon.

Many of the functional units described herein have been labeled as modules, in order to more particularly emphasize their implementation independence. For example, a module may be implemented as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in software for execution by various types of processors. An identified module of executable code may, for instance, comprise one or more physical or logical blocks of computer instructions, which may, for instance, be organized as an object, procedure, or function. Nevertheless, the executables of an identified module need not be physically located together but may comprise disparate instructions stored in different locations which, when joined logically, or operationally, together, comprise the module and achieve the stated purpose for the module.

Indeed, a module of executable code may be a single instruction, or many instructions, and may even be distributed over several different code segments, among different programs, and across several memory devices. Similarly, operational data may be identified and illustrated herein within modules and may be embodied in any suitable form and organized within any suitable type of data structure. The operational data may be collected as a single data set or may be distributed over different locations including over different storage devices, and may exist, at least partially, merely as electronic signals on a system or network. The system or network may include non-transitory computer readable media. Where a module or portions of a module are implemented in software, the software portions are stored on one or more computer readable storage media, which may be a non-transitory media.

Any combination of one or more computer readable storage media may be utilized. A computer readable storage medium may be, for example, but not limited to, an electronic, magnetic, optical, electromagnetic, infrared, or semiconductor system, apparatus, or device, or any suitable combination of the foregoing, including non-transitory computer readable media.

More specific examples (a non-exhaustive list) of the computer readable storage medium would include the following: a portable computer diskette, a hard disk, a random access memory (RAM), a read-only memory (ROM), an erasable programmable read-only memory (EPROM or Flash memory), a portable compact disc read-only memory (CD-ROM), a digital versatile disc (DVD), a Blu-ray Disc, an optical storage device, a magnetic tape, a Bernoulli drive, a magnetic disk, a magnetic storage device, a punch card, integrated circuits, other digital processing apparatus memory devices, or any suitable combination of the foregoing, but would not include propagating signals.

In the context of this disclosure, a computer readable storage medium may be any tangible medium that can contain or store a program for use by or in connection with an instruction execution system, apparatus, or device.

Program code for carrying out operations for aspects of the present disclosure may be generated by any combination of one or more programming language types, including, but not limited to any of the following: machine languages, scripted languages, interpretive languages, compiled languages, concurrent languages, list-based languages, object oriented languages, procedural languages, reflective languages, visual languages, or other language types.

The program code may execute entirely on one computer, partly on one computer, as a stand-alone software package, partly on one computer and partly on a remote computer or entirely on the remote computer or server. In the latter scenario, the remote computer may be connected to other computers through any type of network, including a local area network (LAN) or a wide area network (WAN), or the connection may be made to an external computer (for example, through the Internet using an Internet Service Provider).

Furthermore, in this detailed description, a person skilled in the art should note that quantitative qualifying terms such as "generally," "substantially," "mostly," "approximately" and other terms are used, in general, to mean that the referred to object, characteristic, or quality constitutes a majority of the subject of the reference. The meaning of any of these terms is dependent upon the context within which it is used, and the meaning may be expressly modified.

Therefore, it is intended that the disclosure not be limited to the particular embodiment disclosed as the best or only mode contemplated for carrying out this disclosure, but that the disclosure will include all embodiments falling within the scope of the appended claims. Also, in the drawings and the description, there have been disclosed exemplary embodiments and, although specific terms may have been employed, they are unless otherwise stated used in a generic and descriptive sense only and not for purposes of limitation, the scope of the disclosure therefore not being so limited. Moreover, the use of the terms first, second, etc. do not denote any order or importance, but rather the terms first, second, etc. are used to distinguish one element from another. Furthermore, the use of the terms a, an, etc. do not denote a limitation of quantity, but rather denote the presence of at least one of the referenced item. Thus, the scope of the disclosure should be determined by the appended claims and their legal equivalents, and not by the examples given.

## Claims

1. A method for outputting feedback to a user, **characterized by**:
acquiring verbal data (704) from a first party during a communication session, the acquired verbal data (704) based, at least in part, on content of the communication session;
acquiring non-verbal data (702) from the first party during the communication session, the acquired non-verbal data (702) based, at least in part, on one or more behaviors exhibited by the first party during the communication session;
accessing one or more models (106, 108, 124, 126, 128) from an electronic memory device (104);
generating feedback data (716) based, at least in part, on the one or more accessed models (106, 108, 124, 126, 128), the acquired verbal data (704) and the acquired non-verbal data (702); and
outputting the feedback data (716) to a user device (134), the feedback data (716) utilized by one or more users to affect the communication session during the communication session.

2. The method, as claimed in claim 1, wherein acquiring non-verbal data (702) includes acquiring behavioral data, based, at least in part, on acoustic signal processing and a behavioral model (106).

3. The method, as claimed in any preceding claim, wherein generating feedback data (716) is based, at least in part, on a context model (108).

4. The method, as claimed in any preceding claim, wherein generating feedback data (716) is based, at least in part, on a call type model (710).

5. The method, as claimed in any preceding claim, wherein generating feedback data (716) is based, at least in part, on a topic detection model (110, 712).

6. The method, as claimed in any preceding claim, wherein generating feedback data (716) is based, at least in part, on a call score model (714).

7. The method, as claimed in any preceding claim, wherein outputting the feedback data (716) to the user device (143) is at a remote location.

8. The method, as claimed in any preceding claim, where the feedback data (716) is utilized by one or more users to affect subsequent communication sessions.

9. The method, as claimed in any preceding claim, wherein generating the feedback data (716) is based, at least in part, on segmentation.

10. The method, as claimed in any preceding claim, wherein acquiring non-verbal data (702) is acquired independent of a model.

11. The method, as claimed in any preceding claim, wherein generating feedback data (716) is based, at least in part, on one or more determined time intervals associated with acquiring verbal data (704).

12. The method, as claimed in any preceding claim, wherein generating feedback data (716) is based, at least in part, on a first time interval associated with acquiring verbal data (704) and a second time interval associated with acquiring verbal data (704), the second time interval being after the first time interval.

13. A system for outputting feedback (716) to a user, comprising:
one or more memories (104) configured to store representations of data (700) in an electronic form; and
one or more processors (105, 158), operatively coupled to one or more of the memories (104), the processors (105, 158) configured to access the data and process the data to:
acquire verbal data (704) from a first party during a communication session, the acquired verbal data (704) based, at least in part, on content of the communication session,
acquire non-verbal data (702) from the first party during the communication session, the acquired non-verbal data (702) based, at least in part, on one or more behaviors exhibited by the first party during the communication session,
access one or more models (106, 108, 124, 126, 128) from an electronic memory device (104),
generate feedback data (716) based, at least in part, on the one or more accessed models (106, 108, 124, 126, 128), the acquired verbal data (704) and the acquired non-verbal data (702), and
output the feedback data (716) to a user device (134), the feedback data (716) utilized by one or more users to affect the communication session during the communication session.

14. The system, as claimed in claim 13, where the acquired non-verbal data (702) includes behavioral data, based, at least in part, on acoustic signal processing and a behavioral model (106).

15. The system, as claimed in any preceding claim, where the feedback data (716) is based, at least in part, on one or more determined time intervals associated with the acquired verbal data (704).
